(19) Europäisches Patentamt
European Patent Office
Office européen des brevets

(11) **EP 4 233 559 A2**

(12) **EUROPEAN PATENT APPLICATION**

(43) Date of publication:
**30.08.2023 Bulletin 2023/35**

(21) Application number: **23175007.6**

(22) Date of filing: **25.09.2020**

(51) International Patent Classification (IPC):
**A23L 13/40** (2023.01)      **A23B 4/20** (2006.01)
**A23B 4/24** (2006.01)      **A23B 4/027** (2006.01)
**A23L 13/60** (2016.01)      **A23L 3/3472** (2006.01)

(52) Cooperative Patent Classification (CPC):
**A23L 13/422; A23B 4/027; A23L 3/3472;**
**A23L 13/426; A23L 13/428; A23L 13/432;**
**A23L 13/60**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2019 PCT/IB2019/001049**

(62) Document number(s) of the earlier application(s) in
accordance with Art. 76 EPC:
**20775360.9 / 4 033 918**

(71) Applicant: **Purac Biochem B.V.**
**4206 AC Gorinchem (NL)**

(72) Inventors:
• **McCoy, Garrett Douglas**
**Lenexa (US)**

• **Kumar, Saurabh**
**Lenexa (US)**
• **Rourke, Thomas**
**Lenexa (US)**

(74) Representative: **Nederlandsch Octrooibureau**
**P.O. Box 29720**
**2502 LS The Hague (NL)**

Remarks:
This application was filed on 24-05-2023 as a
divisional application to the application mentioned
under INID code 62.

(54) **COMPOSITION FOR USE IN PROCESSED MEAT**

(57) The invention relates to composition for use in processed meat, said composition comprising on a dry matter basis:
(a) between 0.2 and 4 mmol/g of carbonate;
(b) at least 20% w/w of vegetal protein;
(c) between 10 and 70% w/w of a vegetal fiber selected from the group of cellulose fiber, inulin and combinations thereof;
(d) between 0 and 5% w/w of acid equivalent of glutamate;

(e) 20-1200 $\mu$mol/g of phenolic diterpene selected from carnosic acid, carnosol and combinations thereof;
wherein the combination of components (a), (b), (c) and (d) constitutes at least 60 wt.% of the dry matter that is contained in the composition.

This composition is capable of providing similar functionality to processed meat as phosphates.

The invention also relates to a method for the preparation of the aforementioned composition and to the application of the composition in processed meat.

EP 4 233 559 A2

**Description**

**TECHNICAL FIELD OF THE INVENTION**

The invention relates to a composition for use in processed meat, said composition comprising, on a dry matter basis:

(a) between 0.2 and 3 mmol/g of carbonate;
(b) between 20 and 92% w/w of vegetal protein;
(c) between 10 and 70% w/w/ of a vegetal fiber selected from the group of cellulose fiber, inulin and combinations thereof.

The present composition may suitably be used as a replacer of phosphate or tripolyphosphate in processed meat.
The invention further relates to a method for the preparation of the composition and the use thereof in the production of processed meat.

**BACKGROUND OF THE INVENTION**

Processed meat is meat that has been subjected to modification in order to improve its taste and/or to extend its shelf life. Processing methods include e.g. grinding, salting, curing, fermentation and smoking. Examples of processed meat products are bacon, ham, sausages, salami, corned beef, beef jerky, canned meat and meat-based sauces.
In order to attain processed meat with the desired properties, various additional ingredients are commonly used. These additives may contribute to the shelf life, both microbiologically and chemically, the texture, flavor and color of the product and to the yield of the method of preparation. Conventional additives include salt, phosphates, benzoates, sorbates, acids, nitrate or nitrite, and caseinate.
Phosphates are very popular ingredients to use in meat and poultry products due to their ability to improve water binding, protein functionality and flavor stability. Phosphates have different functions including buffering capacity, water-holding capacity and chelating metals. Phosphates also function as an antioxidant when color needs to be preserved.
Phosphates are not considered natural or organic, which is why the meat processing industry would like to replace phosphate with clean label ingredients. Also, there is a growing concern regarding the use of phosphates because of indications that high intake of dietary phosphorus may lead to osteoporosis, damaged blood vessels and impaired kidney function.
LeMaster et al. (Potassium carbonate improves fresh pork quality, 63rd International Congress of Meat Science and Technology, 13-18th August 2017, Cork, Ireland.) conducted a study where boneless pork loin chops were subjected to one of six enhancement treatments. The chops were placed under simulated retail display and analysed for color, pH, cook loss, and tenderness. The 0.3% and 0.5% $K_2CO_3$ treatments increased pH, decreased lightness, maintained redness, decreased yellowness, reduced cook loss, and improved tenderness. Additionally, both 0.3% and 0.5% $K_2CO_3$ maintained or improved pork quality compared to the positive control phosphate treatment.
Öztürk et al. (Effects of Jerusalem Artichoke Powder and Sodium Carbonate as Phosphate Replacers on the Quality Characteristics of Emulsified Chicken Meatballs, Korean J. Food Sci. An. 2018 February 38(1):26-42) investigated the quality of emulsified chicken meatballs produced with Jerusalem artichoke powder (JAP), either alone or in combination with sodium carbonate (SC) as sodium tripolyphosphate (STPP) replacers. The results showed that naturally dried JAP showed favorable technological properties in terms of water-oil binding and gelling. Emulsion batters formulated with JAP-SC mixture showed lower jelly and fat separation, higher water-holding capacity and higher emulsion stability than control samples with STPP. In final product, incorporation of JAP-SC mixture increased moisture and reduced lipid and energy values, and kept the pH value similar to control. Added JAP lead to increments in b* values whereas decreases L* values. Cook yield was similar to control in phosphate-free samples formulated with JAP-SC mix. Either low or medium ratios of JAP in combination with SC managed to protect most of the sensory parameters, while sensory scores tend to decrease in samples containing high levels of JAP.
US 2009/0220665 describes the combined application of dried citrus fruit fiber and soy protein flour in the preparation of processed meat.
US 6,890,574 describes a taste enhancer for savory food and beverage compositions comprising clear tomato concentrate.
EP-A 1 360 906 describes a food composition comprising at least one vegetable polysaccharide; at least one animal gelatin; and at least one protein.
US 2015/296834 describes a meat structured protein product, wherein the meat structured protein product comprises (a) protein fibers that are substantially aligned; and (b) at least 5% by weight of a non-animal protein material.

US 2002/155201 describes an emulsion for processed meat which comprises (A) oil and fat of animal and plant, (B) at least one substance selected from (a) at least one compound selected from sucrose fatty acid esters, monoglycerides, polyglycerides and lecithins and (b) at least one substance selected from proteins of animals and plants, hydrolysis proteins and enzyme decomposed proteins, and (C) at least one compound selected from basic amino acids and salts thereof.

US 2009/208612 describes a meat analog product comprising a combination of a dry component, a liquid, and a monovalent cationic carbonate or bicarbonate source.

JP 2018 174731 relates to an agent that improves the yield of a processed meat product after heating.

WO 2008/124576 describes a dried food composition comprising a structured plant protein product and a firming agent.

US 2006/073261 describes a soy protein containing food product comprising:

(A) a fibrous material containing soy protein and soy cotyledon fiber;
(B) a humectant comprising (i) a colorant and at least one of (ii) a flavoring agent, (iii) a triglyceride oil, (iv) a food grade acid or acidic salt, (v) a food grade base or basic salt, or (vi) a food grade emulsion; and
(C) water.

## SUMMARY OF THE INVENTION

The inventors have developed a composition that can suitably be used to replace phosphates in processed meat. This composition comprises, on a dry matter basis:

(a) between 0.2 and 3 mmol/g of carbonate selected from potassium carbonate, sodium carbonate, potassium bicarbonate, sodium bicarbonate and combinations thereof;
(b) between 20 and 92% w/w of vegetal protein;
(c) between 10 and 70% w/w of a vegetal fiber selected from the group of cellulose fiber, inulin and combinations thereof;
(d) between 0 and 5% w/w of acid equivalent of glutamate;

wherein the combination of components (a), (b), (c) and (d) constitutes at least 60 wt.% of the dry matter that is contained in the composition.

It was found that this composition is capable of providing similar functionality to processed meat as phosphates, notably an improved cook yield and a firmer texture.

The invention also relates to a method for the preparation of the aforementioned composition, comprising :

- providing a carbonate source containing at least 50% carbonate by weight of dry matter, said carbonate being selected from potassium carbonate, sodium carbonate, potassium bicarbonate, sodium bicarbonate and combinations thereof;
- providing a source of vegetal protein containing at least 50% protein by weight of dry matter;
- providing a source of vegetal fiber containing at least 50 wt.% of vegetal fiber by weight of dry matter, said vegetal fiber being selected from the group of cellulose fiber, inulin and combinations thereof;
- mixing the carbonate, the source of vegetal protein and the source of vegetal fiber.

Finally, the invention provides a process of preparing processed meat, said process comprising adding the aforementioned composition to meat in an amount of between 0.3 and 15% w/w dry matter.

## DETAILED DESCRIPTION OF THE INVENTION

A first aspect of the invention relates to a composition for use in processed meat, said composition comprising on a dry matter basis:

(a) between 0.2 and 3 mmol/g of carbonate;
(b) between 20 and 92% w/w of vegetal protein;
(c) between 10 and 70% w/w of a vegetal fiber selected from the group of cellulose fiber, inulin and combinations thereof;
(d) between 0 and 5% w/w of acid equivalent of glutamate;

wherein the combination of components (a), (b), (c) and (d) constitutes at least 60 wt.% of the dry matter that is contained in the composition.

The term "carbonate" as used herein encompasses carbonate salts, such as potassium carbonate ($K_2CO_3$), sodium carbonate ($Na_2CO_3$), potassium bicarbonate ($KHCO_3$) and sodium bicarbonate ($NaHCO_3$), as well as the dissociated forms of these salts.

The term "glutamate" as used herein, unless indicated otherwise, encompasses glutamic acid, salts of glutamic acid, dissociated glutamate and combinations thereof.

The concentration of glutamate expressed as "% w/w acid equivalent" refers to the total concentration of glutamate assuming that all glutamate is present as glutamic acid.

The term "cellulose fiber", as used herein, refers to fibers structured from cellulose. In addition to cellulose, cellulose fibers may also contain other plant cell wall polysaccharides, such as hemicellulose and lignin.

The term "microfibrillated cellulose fiber" or "MCF", as used herein, unless indicated otherwise, refers to water-insoluble cellulose microfibrils, more particularly to water-insoluble cellulose microfibrils having a length L and a mean diameter D, wherein the ratio LID is at least 30 and D is in the range of 1-50 nm. These cellulose microfibrils are no longer meshed into a cell wall polysaccharide matrix as a result of a defibrillation treatment, e.g. high pressure homogenization.

The term "diameter" as used herein in relation to particle, unless indicated otherwise, refers to the average equivalent spherical diameter of said particle. Likewise, unless indicated otherwise, the term "diameter" as used herein in relation to a microfibril, refers to the average diameter of said microfibril.

In a preferred embodiment, the composition of the present invention is a powder having a water content of less than 15% w/w or an aqueous liquid having a dry matter content of 10 to 80% w/w.

The composition preferably contains on a dry matter basis between 0.3 and 2.5 mmol/g of carbonate, more preferably between 0.4 and 2.2 mmol/g carbonate and most preferably between 0.5 and 2 mmol/g carbonate.

If the composition is a powder, the carbonate is preferably selected from potassium carbonate, sodium carbonate, potassium bicarbonate, sodium bicarbonate and combinations thereof. More preferably, the carbonate is selected from potassium carbonate, sodium carbonate and combinations thereof. Most preferably, the carbonate is potassium carbonate.

If the composition is a powder, the glutamate is preferably selected from sodium glutamate, potassium glutamate, glutamic acid and combinations thereof.

According to another preferred embodiment, the composition of the present invention is an aqueous liquid having a dry matter content of 10 to 80% w/w. More preferably, the dry matter content of the aqueous liquid is between 20 and 75% w/w, even more preferably between 30 and 70% w/w.

If the composition is in liquid form, the carbonate is preferably selected from carbonate (in its dissociated form), carbonic acid and combinations thereof.

When the composition is in liquid form, the glutamate is preferably selected from glutamate (in its dissociated form), glutamic acid and combinations thereof.

The present composition preferably comprises, on a dry matter basis, between 25 and 80% w/w, more preferably between 30 and 75% w/w, of the vegetal protein.

The vegetal protein that is contained in the present composition is preferably selected from pulse protein, tuber protein and combinations thereof. Examples of pulse proteins that may suitably be employed include proteins from peas, lentils, lupins and/or beans. Examples of tuber proteins that may be employed include potato protein, cassava protein, sweet potato protein and yam protein.

Preferably, the vegetal protein is pulse protein. Most preferably, vegetal protein is pea protein.

The present composition contains vegetal fiber selected from cellulose fiber, inulin and combinations thereof. The inventors have found that the inclusion of such vegetal fiber in the present composition helps to minimize moisture loss during cooking and by improving quality attributes of processed meat products, such as sliceability (firmness), juiciness and tenderness. The present composition preferably comprises, on a dry matter basis, not more than 60% w/w, preferably between 20 and 50% w/w, of the vegetal fiber.

Examples of cellulose fibers that may be applied in the present composition include microfibrillated cellulose from citrus fruit (e.g. CITRI-FI® 100M40, Fiberstar, River Falls, WI, USA) and carrot fiber (e.g. Hydrobind® Carrot Fiber (LP), Wm. Bolthouse Farms Inc., Bakersfield, CA, USA).

According to a particularly preferred embodiment, the vegetal fiber is selected from microfibrillated cellulose fiber (MFC), inulin and combinations thereof.

The MFC employed in accordance with the present invention preferably originates from parenchymal tissue from fruits, roots, bulbs, tubers, stalks, seeds or combination thereof. More preferably, the MFC originates from fruits.

Examples of suitable sources for MFC includes citrus fruit, tomato fruit, peach fruit, pumpkin fruit, kiwi fruit, apple fruit, mango fruit, sugar beet, sugar cane, beet root, turnip, parsnip, maize, oat, wheat, peas, psyllium, bamboo, onion or combinations thereof. Even more preferably, the MFC originates from citrus fruit, tomato fruit, sugar cane, sugar beet or a combination thereof. Preferably, the MFC originates from citrus fruit, sugar beet or a combination thereof, most preferably the MFC originates from citrus fruit.

The MFC in the composition according to the invention is typically produced from parenchymal material that besides cellulose contains hemicellulose and pectin. Preferably, the composition according to the invention contains hemicellulose and pectin from the same source(s) as the MFC. More preferably, the composition according to the invention contains a weight ratio of hemicellulose and pectin to MFC of between 0 and 1.3, more preferably of between 0.05 and 1.0, most preferably of between 0.1 and 0.7.

The MFC is obtainable from the aforementioned sources by processes generally known by those skilled in the art. WO 2006/033697, the disclosure of which is hereby incorporated by reference in its entirety, describes exemplary processes for producing the plant fiber materials suitable for use in the present invention. Such processes typically entail a high pressure homogenization step or other process steps in which high shear conditions are applied, in order to obtain the MFC with the properties as described herein.

It is known to those skilled in the art that treatment of the plant pulp with chemicals (e.g. acids and/or bases), enzymes (e.g. pectinase, protease, cellulase, hemicellulase or mixtures thereof) and/or heat, affects the solubilization and extraction of certain plant cell wall components, in particular pectin and hemicelluloses. This may be used to tailor the specific properties of the fiber material, especially the water binding capacity and/or viscosifying properties.

Particularly suitable MFC containing materials are commercially available from suppliers like J. Rettenmaier and Sohne GMBH under the Vitacel brand/name; Herbafood Ingredients under the Herbacel brand/name; and Fiberstar under the Citri-Fi brand/name.

The MFC that is contained in the food product typically comprises at least 80% w/w of cellulose microfibrils having a length L and a mean diameter D, wherein the ratio LID is at least 10 and D is in the range of 3-70 nm.

The cellulose microfibrils of the MFC typically have a mean diameter smaller than 30 nm, more preferably smaller than 20 nm, most preferably smaller than 15 nm.

The average degree of crystallinity of the MFC typically is less than 40%, more preferably less than 35% and most preferably less than 30%.

Without wishing to be bound by any theory, it is believed that the advantageous effects of MFC are at least in part based on the water-binding capacity of the cellulose microfibrils. In a preferred embodiment of the invention, the MFC exhibits a water binding capacity within the rage of 4-25 g of water per gram MFC, most preferably within the range of 5-20 g of water per gram MFC.

The water binding capacity of MFC can be measured using the following procedure: 2.5 g of the MFC (dry powder) is placed into a 50 ml centrifuge tube and weighed (noted as W1). Then 40 g of milli-Q water (noted as W2) is added. The tube is closed and stirred by hand for one minute. The tube is centrifuged for ten minutes at 2000 rpm, and the supernatant is decanted and weighed (noted as W3). The water binding capacity (WBC) of the MFC is calculated by the following formula: WBC=(W2-W3)/W1. The WBC is expressed as grams of water per gram of MFC (g water/g MFC).

In an alternative embodiment of the invention, the vegetal fiber is inulin. Inulin is a natural dietary fiber material, present in many plants. Chicory root contains a relatively high amount of inulin and is therefore often used as an inulin source. Inulin is a polysaccharide chain of fructose monomers. It is commercially available in various grades of purity and various degrees of polymerization like e.g. under the brand/name of Frutafit from Sensus.

In a preferred embodiment of the invention, the inulin is provided by a highly pure inulin product having a purity of at least 90% inulin on dry matter. In a more preferred embodiment, the purity of the inulin product is at least 95%, even more preferred is a purity of at least 99%.

In another preferred embodiment of the invention, the inulin has an average degree of polymerization of between 5 and 50 monomers, in a more preferred embodiment between 10 and 40, in an even more preferred embodiment between 15 and 35, most preferably between 20 and 30 monomers.

Most preferably, the vegetal fiber employed in accordance with the present invention is microfibrillated cellulose fiber.

Glutamate is known as a taste enhancer in food, providing an "umami" taste. Whereas it is often added in the form of pure monosodium glutamate, glutamate can also be added in the form of a glutamate-rich product such as mushroom extract, tomato extract or yeast extract.

In a preferred embodiment of the present invention, the composition comprises on a dry matter basis between 0.05 and 3% w/w, more preferably between 0.1 and 3% w/w, acid equivalent of glutamate.

In one preferred embodiment, the glutamate is provided by mushroom extract, tomato extract, yeast extract or a combinations thereof. Most preferably, the glutamate is provided by mushroom extract.

According to another preferred embodiment, the present composition contains, per g of dry matter, 20-1200 $\mu$mol of phenolic diterpene selected from carnosic acid, carnosol and combinations thereof. Even more preferably, the composition contains, per g of dry matter, 40-400 $\mu$mol of this phenolic diterpene.

The phenolic diterpene is preferably provided by rosemary extract, sage extract or a combination thereof. Most preferably, the phenolic diterpene is provided by rosemary extract.

In a preferred embodiment of the invention, the composition, when dispersed into distilled water of 20°C to provide 100 grams of dry matter per L of water, produces an aqueous composition having a pH in the range of 5.0 to 11.0, more preferably in the range of 6.0 to 8.5.

The present composition can suitably be produced by combining two or more ingredients. A composition in powder form can be obtained by providing the various components in powder form and preparing the composition by means of powder blending. A composition in liquid form can be obtained by providing at least one of the components in liquid form and mixing the other ingredients into the liquid. It is also possible to subsequently dry the liquid composition thus obtained, in order to prepare a composition according to the invention in powder form. Drying methods such as spray drying are well known to persons skilled in the art.

A second aspect of the invention relates to a method of preparing a composition for use in processed meat as described herein before, said method comprising :

- providing a carbonate source containing at least 50% carbonate by weight of dry matter, said carbonate being selected from potassium carbonate, sodium carbonate, potassium bicarbonate, sodium bicarbonate and combinations thereof;
- providing a source of vegetal protein containing at least 50% protein by weight of dry matter;
- providing a source of vegetal fiber containing at least 50 wt.% of vegetal fiber by weight of dry matter, said vegetal fiber being selected from the group of cellulose fiber, inulin and combinations thereof;
- mixing the carbonate, the source of vegetal protein and the source of vegetal fiber.

In a preferred embodiment, both the carbonate source and the source of vegetal protein are provided in the form of a powder. Preferably, also the source of vegetal fiber used in the present method is a powder.

The carbonate source that is employed in the present method preferably contains, calculated by weight of dry matter, at least 70%, more preferably at least 90% of carbonate.

The carbonate source preferably contains, calculated by dry matter, at least 50%, more preferably at least 70% and most preferably at least 90% potassium carbonate.

The source of vegetal protein preferably contains at least 60% protein, more preferably at least 70% protein, by weight of dry matter.

The source of vegetal protein is preferably selected from a pulse protein isolate, a tuber protein isolate or a combination thereof. More preferably, the source of vegetal protein is a pulse protein isolate. Most preferably, the source of vegetal protein is a pea protein isolate.

In one embodiment, the source of vegetal fiber contains at least 50% microfibrillated cellulose by weight of dry matter.

The source of vegetal fiber employed in the present method preferably contains at least 60% and more preferably at least 70% cellulose fiber by weight of dry matter.

According to another embodiment, the source of vegetal fiber contains at least 50%, more preferably at least 60% and most preferably at least 70% inulin by weight of dry matter.

The inulin in the source of vegetal fiber preferably has an average degree of polymerization of between 5 and 50 monomers, more preferably between 10 and 40 monomers, even more preferably between 15 and 35 monomers, most preferably between 20 and 30 monomers.

According to another advantageous embodiment, the present method comprises mixing the carbonate source, the source of vegetal protein and the source of vegetal fiber with a source of glutamate containing at least 1% acid equivalent of glutamate, by weight of dry matter.

The source of glutamate used in the method preferably is a powder.

The source of glutamate preferably contains at least 1.5% acid equivalent of glutamate, more preferably 2-30% acid equivalent of glutamate, by weight of dry matter.

The source of glutamate used in the present method is preferably selected from mushroom extract, tomato extract, yeast extract and combinations thereof. Most preferably, the source of glutamate is a mushroom extract.

According to another preferred embodiment, the present method comprises mixing the carbonate source, the source of vegetal protein and the source of vegetal fiber with a source of phenolic diterpene containing, per gram of dry matter, at least 0.3 mmol of phenolic diterpene selected from carnosic acid, carnosol and combinations thereof.

The source of phenolic diterpene preferably contains at least 0.4 mmol of the phenolic diterpene per gram of dry matter. Even more preferably, the source of phenolic diterpene contains 0.5-2.7 mmol of the phenolic diterpene per gram of dry matter.

A third aspect of the invention relates to a process of preparing processed meat, said process comprising adding the composition of the present invention to meat in an amount of between 0.3 and 15% w/w dry matter, preferably between 0.5 and 10% w/w dry matter.

The composition may be used in liquid or dry form. If it is used in dry form, it may be reconstituted in a suitable quantity of water, e.g. tap water, before adding it to the meat. To this end, the ingredients are typically agitated for a period of time sufficient to form a homogeneous liquid, which may be a dispersion or solution.

In a preferred embodiment of the invention, the meat is selected from the group consisting of whole muscle meat, cuts or slices of whole muscle meat, ground or comminuted muscle meat and emulsified meat. In a preferred embodiment of the invention the meat is fresh meat, which may be in the form of whole muscle meat, cuts or slices of whole muscle meat or ground or comminuted muscle meat. In this context the term 'fresh' means that the meat has not been treated by cooking in between removal from the animal carcass and the treatment according to the invention. In a preferred embodiment, the meat is uncooked meat.

Preferably, the meat is obtained from beef cattle, pork, lamb, poultry, and game, most preferably from beef cattle, pork, chicken and turkey. In another embodiment of the invention, the meat is red meat.

The process for the preparation of processed meat may utilize any method that is known and/or conventionally used for combining fresh meat and an additive composition. For example, meat may be treated with the composition of the invention by dispersing it throughout the fresh meat. Suitable methods include injecting, pumping, spraying, soaking, dipping or otherwise dispersing the composition into or onto the meat. In addition, the method may comprise tumbling, kneading, massaging or otherwise manipulate the meat to further disperse the composition throughout the meat. In some embodiments, the composition is injected under pressure into the meat as part of an automated commercial meat production step. Suitable injectors may be set to pump a particular volume of the composition into each piece of the meat.

In a preferred embodiment of the invention, the process for the preparation of processed meat comprises adding an aqueous liquid containing the present preservation composition, and wherein the composition is added by injection tumbling.

Once the aqueous liquid has been dispersed throughout the meat, the meat may subsequently be cooked until the desired internal temperature is reached, packaged and refrigerated or frozen. Alternatively, once the aqueous liquid has been dispersed throughout the meat, the meat may be packaged, cooked and then refrigerated or frozen.

The processed meat obtainable by the process for the preparation of processed meat typically has advantageous characteristics with respect to moisture retention, color, texture, flavor and shelf life.

The invention has been described by reference to certain embodiments discussed above. It will be recognized that these embodiments are susceptible to various modifications and alternative forms well known to those of skill in the art. Many modifications in addition to those described above may be made to the structures and techniques described herein without departing from the spirit and scope of the invention. Accordingly, although specific embodiments have been described, these are examples only and are not limiting upon the scope of the invention.

Furthermore, for a proper understanding of this document and in its claims, it is to be understood that the verb "to comprise" and its conjugations used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

All patent and literature references cited in the present specification are hereby incorporated by reference in their entirety.

The following examples are offered for illustrative purposes only, and are not intended to limit the scope of the present invention in any way.

**EXAMPLES**

Compositions for use in processed meat were tested in a meat product. The meat product used in the tests was a cooked turkey meat batter. Tests were performed to determine the effect on pH and the contribution to the cook yield.

Materials and equipment used to make the meat products were are as follows:

- Minipack-torre, Model MVS45X
- High Barrier Casing: 60 mm*609.4 mm
- Mauting Smoking Chamber (Mauting, Valtice, Czech Republic), used for steam cooking.

The meat products were prepared according to the following procedure:
1. Turkey breast was ground twice to ¼"
2. All other ingredients were added to brine and mixed for 5 minutes
3. The brine was added to the ground meat and mixed for 5 minutes.
4. The meat batter so obtained was divided into 2 lbs. portions
5. Each portion was vacuum packaged in a cooking bag
6. The packaged meat batter was allowed to rest for 1 hour
7. After resting the product was cooked to 73.9°C using a stage cooking schedule as follows:

| Stage | Duration (min.) | Dry bulb temp. (°C) | Relative Humidity (%) |
|---|---|---|---|
| Steam Cook | 30 | 60.0 | 98 |
| Steam Cook | 30 | 65.6 | 98 |
| Steam Cook | 30 | 71.1 | 98 |
| Steam Cook | 73.9° C* | 76.6 | 98 |
| *Untimed cook stage runs until minimum internal temperature (73.9° C) is reached, and held for 60 seconds | | | |

8. After cooking the product was chilled overnight to 2.0° C.

9. After chilling, product was removed from casing, patted dry, and cook yield was calculated as:

$$\frac{Cooked\ Weight}{(Raw\ Weight - Casing\ Weight)} \times 100 = Cook\ Yield$$

10. Product was placed on automatic deli slicer and thirty slices collected from each treatments. Slicing yield was calculated as:

$$\frac{Intact\ Slices}{Total\ Slices\ Collected} \times 100 = Slicing\ Yield$$

11. Texture profile analysis was performed using a TAXT2 texture analyzer (Texture Technologies Corp., Scarsdale, New York, USA). Texture analysis was performed by compressing sliced samples twice using a 7.62 cm diameter probe and defined as:

◦ Hardness - peak force of first compression

◦ Springiness - how well the product regains shape after first compression: measured at downward stroke of second compression.

◦ Cohesiveness - how well the product withstand the second compression: recorded as total force of second compression divided by total force of first compression.

12. Sensory analysis was performed using an 8-point hedonic scale:

◦ 8 - Like very much

◦ 1 - Dislike very much

**Example 1**

Dry powder blends (Composition 1 and 2) were prepared on the basis of the recipes shown in Table 1.

**Table 1**

| | Compositions (in wt.%) | |
|---|---|---|
| | 1 | 2 |
| Potassium carbonate | 16.7 | 9.1 |
| Pea protein [1] | 83.3 | 90.9 |
| [1] Nutralys® F85F, Roquette America Inc., Geneva, IL, USA | | |

Meat batters were prepared on the basis of the recipes shown in Table 2.

**Table 2**

| Ingredients | Processed meat (in parts by weight) | | | |
|---|---|---|---|---|
| | Control | A | 1 | 2 |
| Ground meat | 100 | 100 | 100 | 100 |
| | | | | |
| **Brine:** | | | | |
| Salt | 1.5 | 1.5 | 1.5 | 1.5 |
| K-carbonate | | 0.1 | | |
| Composition 1 | | | 0.6 | |
| Composition 2 | | | | 1.1 |
| Water | 20 | 20 | 20 | 20 |

The cook yield and pH of the cooked products were determined. The results are summarized in Table 3.

**Table 3**

| | Control | A | 1 | 2 |
|---|---|---|---|---|
| Cooked meat pH | 6.3 | 6.4 | 6.4 | 6.4 |
| Cook yield | 86.7% | 89.7% | 90.9% | 91.4% |

**Example 2**

Dry powder blends were prepared on the basis of the recipes shown in Table 4.

**Table 4**

| | Compositions (in wt.%) | | | |
|---|---|---|---|---|
| | 1 | 2 | 3 | 4 |
| Potassium carbonate | 18.2 | 12.5 | 9.5 | 13.6 |
| Pea protein [1] | 45.5 | 62.5 | 71.4 | 68.2 |
| Citrus fiber [2] | 36.3 | 25.0 | 19.1 | 18.2 |
| [1] Nutralys® F85F, Roquette America Inc., Geneva, IL, USA [2] CITRI-FI® 100M40, Fiberstar, River Falls, WI, USA | | | | |

Meat batters were prepared on the basis of the recipes shown in Table 5.

**Table 5**

| Ingredients | Processed meat (in parts by weight) | | | |
|---|---|---|---|---|
| | Product 1 | Product 2 | Product 3 | Product 4 |
| Ground meat | 100 | 100 | 100 | 100 |
| | | | | |
| **Brine:** | | | | |
| Salt | 1.5 | 1.5 | 1.5 | 1.5 |
| Composition 1 | 0.55 | | | |
| Composition 2 | | 0.8 | | |

(continued)

| Brine: | | | | |
|---|---|---|---|---|
| Composition 3 | | | 1.05 | |
| Composition 4 | | | | 1.1 |
| Water | 20 | 20 | 20 | 20 |

The cook yield and pH of the cooked products were determined. The results are summarized in Table 6.

**Table 6**

| | 1 | 2 | 3 | 4 |
|---|---|---|---|---|
| Cooked meat pH | 6.5 | 6.4 | 6.5 | 6.5 |
| Cook yield | 95.5 | 93.9 | 92.2 | 92.7 |

## Example 3

Dry powder blends were prepared on the basis of the recipes shown in Table 7.

**Table 7**

| | Compositions (in wt.%) | | |
|---|---|---|---|
| | 1 | 2 | 3 |
| Potassium carbonate | 8 | 8 | 8 |
| Pea protein [1] | 60 | 60 | 60 |
| Carrot fiber [2] | 16 | | |
| Citrus fiber [3] | | 16 | |
| Inulin [4] | | | 16 |
| Yeast extract [5] | 16 | 16 | 16 |
| [1] Nutralys® F85F, Roquette America Inc., Geneva, IL, USA [2] Hydrobind® Carrot Fiber (LP), Wm. Bolthouse Farms Inc., Bakersfield, CA, USA [3] CITRI-FI® 100M40, Fiberstar, River Falls, WI, USA [4] Fruitafit® IQ, Sensus, Roosendaal, Netherlands [5] Springaline® BA13 / 0 - PW | | | |

Meat batters were prepared on the basis of the recipes shown in Table 8.

**Table 8**

| Ingredients | Processed meat (in parts by weight) | | | |
|---|---|---|---|---|
| | Control | 1 | 2 | 3 |
| Ground meat | 100 | 100 | 100 | 100 |
| | | | | |
| Brine: | | | | |
| Salt | 1.5 | 1.5 | 1.5 | 1.5 |
| Composition 1 | | 1.25 | | |
| Composition 2 | | | 1.25 | |
| Composition 3 | | | | 1.25 |
| Water | 20 | 20 | 20 | 20 |

The cook yield and pH of the cooked products were determined. The results are summarized in Table 9.

**Table 9**

|  | Control | 1 | 2 | 3 |
|---|---|---|---|---|
| Cooked meat pH | 6.1 | 6.4 | 6.3 | 6.4 |
| Cook yield | 89.4 | 92.1 | 92.2 | 92.3 |

## Example 4

A dry powder blend was prepared on the basis of the recipe shown in Table 10.

**Table 10**

|  | Composition 1 (in wt.%) |
|---|---|
| Potassium carbonate | 15.4 |
| Pea protein [1] | 38.5 |
| Citrus fiber [2] | 30.7 |
| Yeast extract [3] | 15.4 |
| [1] Nutralys® F85F, Roquette America Inc., Geneva, IL, USA<br>[2] CITRI-FI® 100M40, Fiberstar, River Falls, WI, USA<br>[3] Springaline® BA13 / 0 - PW | |

Meat batters were prepared on the basis of the recipes shown in Table 11.

**Table 11**

| Ingredients | Processed meat (in parts by weight) | | |
|---|---|---|---|
|  | Control | Reference | 1 |
| Ground meat | 100 | 100 | 100 |
|  |  |  |  |
| **Brine:** |  |  |  |
| Salt | 1.5 | 1.5 | 1.5 |
| Na-tripolyphosphate |  | 0.5 |  |
| Composition 1 |  |  | 0.65 |
| Water | 20 | 20 | 20 |

The cook yield and pH of the cooked products were determined. The results are summarized in Table 12.

**Table 12**

|  | Control | Reference | 1 |
|---|---|---|---|
| Cooked Meat pH | 6.2 | 6.4 | 6.4 |
| Cook yield | 86.7 | 95.0 | 94.4 |

## Example 5

A dry powder blend was prepared on the basis of the recipe shown in Table 13.

**Table 13**

| | Compositions (in wt.%) | | |
|---|---|---|---|
| | **1** | **2** | **3** |
| K Carbonate | 18.2 | 15.4 | 13.3 |
| Pea protein [1] | 45.5 | 38.5 | 33.3 |
| Citrus fiber [2] | 36.4 | 30.8 | 26.7 |
| Mushroom extract [3] | | 15.4 | 26.7 |
| [1] Nutralys® F85F, Roquette America Inc., Geneva, IL, USA [2] CITRI-FI® 100M40, Fiberstar, River Falls, WI, USA [3] Draco Natural Products Inc. | | | |

Meat batters were prepared on the basis of the recipes shown in Table 14.

**Table 14**

| | Processed meat (in parts by weight) | | | | |
|---|---|---|---|---|---|
| **Ingredients** | **Control** | **Reference** | **1** | **2** | **3** |
| Ground meat | 100 | 100 | 100 | 100 | 100 |
| | | | | | |
| **Brine:** | | | | | |
| Salt | 1.5 | 1.5 | 1.5 | 1.5 | 1.5 |
| Na-tripolyphosphate | | 0.5 | | | |
| Composition 1 | | | 0.55 | | |
| Composition 2 | | | | .65 | |
| Composition 3 | | | | | .75 |
| Water | 20 | 20 | 20 | | |

The cook yield and pH of the cooked products were determined. The results are summarized in Table 15.

**Table 15**

| | **Control** | **Reference** | **1** | **2** | **3** |
|---|---|---|---|---|---|
| Cooked meat pH | 6.3 | 6.5 | 6.4 | 6.4 | 6.5 |
| Cook Yield | 85.6 | 95.0 | 89.9 | 91.1 | 91.6 |

## Example 6

A dry powder blend was prepared on the basis of the recipe shown in Table 16.

**Table 16**

| | Compositions (in wt.%) | |
|---|---|---|
| | **1** | **2** |
| K-carbonate | 18.2 | 15.4 |
| Pea protein [1] | 45.5 | 38.5 |
| Citrus fiber [2] | 36.4 | 30.8 |

(continued)

| | Compositions (in wt.%) | |
|---|---|---|
| | **1** | **2** |
| Rosemary Extract [3] | | 15.4 |
| [1] Nutralys® F85F, Roquette America Inc., Geneva, IL, USA [2] CITRI-FI® 100M40, Fiberstar, River Falls, WI, USA [3] Draco Natural Products Inc. | | |

Meat batters were prepared on the basis of the recipes shown in Table 17.

**Table 17**

| Ingredients | Processed meat (in parts by weight) | | | |
|---|---|---|---|---|
| | Control | Reference | 1 | 2 |
| Ground meat | 100 | 100 | 100 | 100 |
| | | | | |
| **Brine:** | | | | |
| Salt | 1.5 | 1.5 | 1.5 | 1.5 |
| Na-tripolyphosphate | | 0.5 | | |
| Composition 1 | | | 0.55 | |
| Composition 2 | | | | 0.59 |
| Water | 20 | 20 | 20 | 20 |

The cook yield and pH of the cooked products were determined. The results are summarized in Table 18.

**Table 18**

| | Control | Reference | 1 | 2 |
|---|---|---|---|---|
| Cooked meat pH | 6.3 | 6.5 | 6.4 | 6.4 |
| Cook Yield | 85.6 | 95.0 | 91.1 | 90.2 |

The oxidative stability of Processed meat 2 was higher than that of Processed meat 1.

**Example 7**

A dry powder blend was prepared on the basis of the recipe shown in Table 19.

**Table 19**

| | Compositions (in wt.%) |
|---|---|
| | **1** |
| K-carbonate | 18.2 |
| Pea protein [1] | 45.5 |
| Citrus fiber [2] | 36.4 |
| Rosemary Extract [3] | 15.4 |
| [1] Nutralys® F85F, Roquette America Inc., Geneva, IL, USA [2] CITRI-FI® 100M40, Fiberstar, River Falls, WI, USA [3] Draco Natural Products Inc. |

Meat batters were prepared on the basis of the recipes shown in Table 20.

**Table 20**

| Ingredients | Processed meat (in parts by weight) | | |
|---|---|---|---|
| | Control | Reference | 1 |
| Ground meat | 100 | 100 | 100 |
| | | | |
| **Brine:** | | | |
| Salt | 1.5 | 1.5 | 1.5 |
| Na-tripolyphosphate | | 0.5 | |
| Composition 1 | | | 0.59 |
| Water | 20 | 20 | 20 |

The cook yield, pH, and slicing yield of the cooked products were determined. The results are summarized in Table 21.

**Table 21**

| | Control | Reference | 1 |
|---|---|---|---|
| Cooked meat pH | 6.1 | 6.3 | 6.3 |
| Cook Yield | 85.9 | 90.6 | 90.1 |
| Slicing Yield | 0.0 | 100.0 | 100.0 |

The texture profile analysis of the cooked products was performed. The results are summarized in Table 22.

**Table 22**

| | Control | Reference | 1 |
|---|---|---|---|
| Hardness | 9951.2 | 15126.2 | 16069.2 |
| Springiness | 0.84 | 0.90 | 0.93 |
| Cohesiveness | 0.83 | 0.85 | 0.85 |

Sensory analysis of the cooked products was performed. The results are summarized in Table 23.

**Table 23**

| | Control | Reference | 1 |
|---|---|---|---|
| Texture | 2.7 | 7.3 | 7.1 |
| Juiciness | 4.9 | 7.1 | 6.5 |
| Flavor | 5.3 | 5.9 | 5.3 |

## Example 8

Dry powder blends were prepared on the basis of the recipes shown in Table 24.

**Table 24**

| | Compositions (in wt.%) | | |
|---|---|---|---|
| | A | B | 1 |
| K Carbonate | 33.3 | 28.6 | 18.2 |

(continued)

| | Compositions (in wt.%) | | |
|---|---|---|---|
| | **A** | **B** | **1** |
| Pea protein [1] | | 71.4 | 45.5 |
| Inulin fiber [2] | 66.7 | | 36.4 |
| [1] Nutralys® F85F, Roquette America Inc., Geneva, IL, USA<br>[2] Frutafit® TEX, Sensus, Roosendaal, The Netherlands | | | |

Meat batters were prepared on the basis of the recipes shown in Table 25.

**Table 25**

| Ingredients | Processed meat (in parts by weight) | | | |
|---|---|---|---|---|
| | Control | A | B | 1 |
| Ground meat | 100 | 100 | 100 | 100 |
| | | | | |
| **Brine:** | | | | |
| Salt | 1.5 | 1.5 | 1.5 | 1.5 |
| Na-tripolyphosphate | 0.5 | | | |
| Composition A | | 0.3 | | |
| Composition B | | | 0.35 | |
| Composition 1 | | | | 0.55 |
| Water | 20 | 20 | 20 | 20 |

The cook yield, pH, and slicing yield of the cooked products were determined. The results are summarized in Table 26.

Sliceability (firmness) was determined using a TATX2-Plus texture analyzer fitted with a TA-42 blade (Texture Technologies). Samples consisted of 1 slice of product approximately 2 mm thick. Samples were removed from refrigerator and tested immediately. Prior to testing the texture analyzer was calibrated for height using TA-42 blade, and for force using a 200 g and 2000 g calibration weight. Testing was done using Exponent Texture Analysis software. A return to start TA sequence was used. Test speed was 4.00 mm/sec. 5.0 g trigger force was used to start the data acquisition sequence.

**Table 26**

| | Control | A | B | 1 |
|---|---|---|---|---|
| Cook yield | 85% | 93% | 95% | 95% |
| Cooked meat pH | 6.2 | 6.5 | 6.5 | 6.4 |
| Sliceability | 2580 g | 2500 g | 2590 g | 2640 g |

## Claims

1. A composition for use in processed meat, said composition comprising on a dry matter basis:

   (a) between 0.2 and 4 mmol/g of carbonate;
   (b) at least 20% w/w of vegetal protein;
   (c) between 10 and 70% w/w of a vegetal fiber selected from the group of cellulose fiber, inulin and combinations thereof;
   (d) between 0 and 5% w/w of acid equivalent of glutamate;

(e) 20-1200 μmol/g of phenolic diterpene selected from carnosic acid, carnosol and combinations thereof;

wherein the combination of components (a), (b), (c) and (d) constitutes at least 60 wt.% of the dry matter that is contained in the composition.

**2.** Composition according to claim 1, wherein the carbonate selected from potassium carbonate, sodium carbonate, potassium bicarbonate, sodium bicarbonate and combinations thereof.

**3.** Composition according to claim 2, wherein the carbonate is potassium carbonate.

**4.** Composition according to any one of the preceding claims, wherein the vegetal protein is selected from pulse protein, tuber protein and combinations thereof.

**5.** Composition according to claim 4, wherein the vegetal protein is pulse protein, preferably pea protein.

**6.** Composition according to any one of the preceding claims, comprising on a dry matter basis not more than 60% w/w, preferably between 20 and 50% w/w, of the vegetal fiber.

**7.** Composition according to any one of the preceding claims, wherein the vegetal fiber is microfibrillated cellulose fiber.

**8.** Composition according to any one of the preceding claims, comprising on a dry matter basis between 0.05 and 3% w/w, preferably between 0.1 and 2% w/w, acid equivalent of glutamate.

**9.** Method for the preparation of a composition according to any one of the preceding claims, comprising :

- providing a carbonate source containing at least 50% carbonate by weight of dry matter, said carbonate being selected from potassium carbonate, sodium carbonate, potassium bicarbonate, sodium bicarbonate and combinations thereof;
- providing a source of vegetal protein containing at least 50% protein by weight of dry matter;
- providing a source of vegetal fiber containing at least 50 wt.% of vegetal fiber by weight of dry matter, said vegetal fiber being selected from the group of cellulose fiber, inulin and combinations thereof;
- providing a source of phenolic diterpene containing, per gram of dry matter, at least 0.3 mmol of phenolic diterpene selected from carnosic acid, carnosol and combinations thereof
- mixing the carbonate, the source of vegetal protein, the source of vegetal fiber and the source of phenolic diterpene.

**10.** Method according to any one of claim 9, wherein the source of vegetal protein is a pulse protein isolate, a tuber protein isolate or a combination thereof.

**11.** Method according to claim 9 or 10, wherein the source of phenolic diterpene is rosemary extract.

**12.** Method according to claim any one of claims 9-11, wherein the source of vegetal fiber contains at least 50 wt.% cellulose fiber by weight of dry matter.

**13.** Method according to any one of claims 9-12, wherein the method comprises mixing the carbonate source, the source of vegetal protein, the source of phenolic diterpene and the source of vegetal fiber with a source of glutamate containing at least 1% w/w acid equivalent of glutamate by weight of dry matter.

**14.** Method according to claim 13, wherein the source of glutamate is selected from mushroom extract, tomato extract, yeast extract and combinations thereof.

**15.** A process of preparing processed meat, said process comprising adding the composition according to any one of claims 1-8 to meat in an amount of between 0.3 and 15% w/w dry matter, preferably between 0.5 and 10%.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090220665 A
- US 6890574 B
- EP 1360906 A
- US 2015296834 A
- US 2002155201 A
- US 2009208612 A
- JP 2018174731 A
- WO 2008124576 A
- US 2006073261 A
- WO 2006033697 A

**Non-patent literature cited in the description**

- **LEMASTER et al.** Potassium carbonate improves fresh pork quality. *63rd International Congress of Meat Science and Technology,* 13 August 2017
- **ÖZTÜRK et al.** Effects of Jerusalem Artichoke Powder and Sodium Carbonate as Phosphate Replacers on the Quality Characteristics of Emulsified Chicken Meatballs. *Korean J. Food Sci. An.,* 03 February 2018, vol. 8 (1), 26-42